# EUROPEAN PATENT APPLICATION

(11) **EP 2 416 546 A1**
(43) Date of publication of application: **08.02.2012**
(21) Application number: 10196659.6
(22) Date of filing: 22.12.2010
(51) Int. Cl.: H04M 1/725

(54) **Method for providing indication of communicatively coupled device**

(30) Priority: 03.08.2010 US 370385 P
(71) Applicant: Research In Motion Limited, Waterloo, ON N2L 3W8 (CA)
(72) Inventor: Canton, Raymond Lee, Kanata Ontario K2K 3K2 (CA)
(74) Representative: Fennell, Gareth Charles

(57) **Abstract**

A system, method and apparatus are described herein for communicatively coupling a communication device (100) to a computing device (110). In one implementation, identification information of the communication device (100) is transferred to the computing device (110). For example, the identification information can include wallpaper (128) from the communication device (100) that is loaded onto the computing device (110) and displayed to identify the communication device (100). The method can include running (310) a synchronization application (160) on the computing device (110) in response to a request for synchronization, retrieving (320) a wallpaper file (128) associated with a communication device (100), when the communication device (100) is communicatively coupled to the computing device (110), and displaying (330) the wallpaper file (128) on a display (139) associated with the computing device (110).

## Description

### CROSS-RELATED APPLICATIONS

This application claims the benefit of U.S. Provisional Application No. 61/370,385, filed on August 3, 2010, which is incorporated herein by reference in its entirety.

### FIELD OF TECHNOLOGY

The subject matter herein generally relates to communication device identification when communicatively coupled to a computing device.

### BACKGROUND

As communication devices become more complex and feature-rich, users desire to transfer or synchronize files between the communication device and other computing devices, such as a personal computer (PC). The communication device can be configured to be communicatively coupled to the PC. At least one synchronization application can be enabled on at least one of the communication device and the PC. With the communication device coupled to the PC, the at least one synchronization application controls the synchronization of the communication device and the PC. Additionally, the PC can be coupled to multiple different communication devices and accommodate device specific synchronization.

### BRIEF DESCRIPTION OF THE DRAWINGS

Implementation of the present application will now be described, by way of example only, with reference to the attached Figures, wherein:

FIG. 1 illustrates a front view of a communication device in accordance with an exemplary implementation;

FIG. 2 illustrates a first computing device and a second computing device configured for synchronization of configuration files in accordance with an exemplary implementation;

FIG. 3 illustrates a first computing device comprising at least one updated synchronization configuration file in accordance with an exemplary implementation;

FIG. 4 illustrates a first computing device and a second computing device after at least one synchronization file has been updated in accordance with an exemplary implementation;

FIG. 5 illustrates a first computing device and a third computing device configured for synchronization of configuration files in accordance with an exemplary implementation;

FIG. 6 illustrates a first screenshot of a synchronization application running on a computing device;

FIG. 7 illustrates a second screenshot of a synchronization application running on a computing device;

FIG. 8 illustrates a third screenshot of a synchronization application running on a computing device;

FIGS. 9-10 illustrate methods according to exemplary implementations;

FIG. 11 illustrates a block diagram of the communication device and where components of the synchronization application can be stored; and

FIG. 12 illustrates a block diagram representing a handheld communication device interacting in a communication network in accordance with an exemplary implementation.

### DETAILED DESCRIPTION

For simplicity and clarity of illustration, where appropriate, reference numerals have been repeated among the different figures to indicate corresponding or analogous elements. In addition, numerous specific details are set forth to provide a thorough understanding of the implementations described herein. However, the implementations described herein can be practiced without these specific details. In other instances, methods, procedures and components have not been described in detail so as not to obscure the related relevant feature being described. Also, the description is not to be considered as limiting the scope of the implementations described herein.

The term "communication device" refers to a device that is capable of communicating with an external device. Examples of communication devices include a personal digital assistant (PDA), an electronic device, a non-handheld wireless communication device, a pager, a cellular phone, dedicated media player, a cellular smartphone, a wireless organizer, a wirelessly-enabled notebook computer, desktop computer and the like. The term "computing device" refers to a desktop computer, a laptop computer, a communication device and the like. The term "request for synchronization" can be user-initiated or automatically-initiated. For example, the request for synchronization can be in response to a depression of a synchronization key on a communication device. Alternatively, the request for synchronization can be in response to launching a synchronization application. Furthermore, the request for synchronization can be made using a button, menu item or the like once the synchronization application is running on at least one of a communication device or computing device. The term "wallpaper" refers to image that is used as a background on a communication device or computing device. Wallpaper can consist of one or more images arranged to provide at least partial coverage of a display screen. An example is described in more detail below. The term "memory" as used herein can refer to both non-transitory and transitory memory.

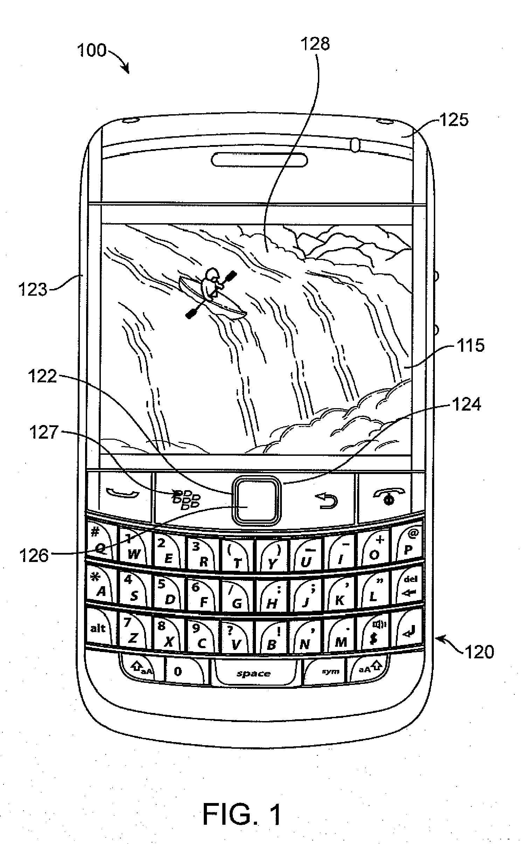

Referring to FIG. 1, an example of a communication device 100 having a navigational input, such as an optical trackpad module 122, is shown. In one arrangement, the communication device 100 can include a display 115 and a keypad 120. The keypad 120 can include a keyfield having alphanumeric keys arranged in a keyboard layout, numeric keys, and other function keys. The keypad 120, instead of comprising physical buttons, can alternatively be a touch keypad that can be shown on the display 115 for touch-screen entry. The display 115 can be user-configurable to have different wallpapers appear in the background: Wallpaper 128 is illustrated as having a kayaker and a waterfall, but any image can be used instead. The wallpaper 128 can be behind icons associated with a home page of the operating system of the device 100. In at least one implementation, the wallpaper 128 is present until a particular application is launched. In other implementations, the wallpaper 128 can be present in addition to the currently running application.

The communication device 100 can include a front surface 125 and a side surface 123 in which the side surface 123 can be substantially perpendicular to the front surface 125. As can be seen in FIG 1, the front surface 125 can include the display 115, menu button 127 and the keypad 120, although these components may be positioned on other surfaces of the communication device 100, if so desired. While in the illustrated implementation the communication device 100 can be a mobile communication device, the communication device 100 can be any of the following: a personal digital assistant (PDA), a handheld electronic device, a non-handheld wireless communication device, a pager, a cellular phone, a cellular smart-phone, a wireless organizer, a wirelessly-enabled notebook computer and the like.

The optical trackpad module 122 can include a trackpad 124, which can have an outer surface 126. In one arrangement, the outer surface 126 of the trackpad 124, which can be used as a navigational input, can be positioned on top of, or flush with, the front surface 125 of the communication device 100. In an alternative arrangement, the outer surface 126 of the trackpad 124 can be positioned on the side surface 123. The outer surface 126 of the trackpad 124 can be positioned at other suitable locations on the communication device 100, such as a back surface (not shown) of the communication device 100, for example. In one particular example, the outer surface 126 can be substantially planar or flat. The outer surface 126, however, can have other suitable shapes such as circles, octagons, squares or rectangles.

As contemplated by this disclosure, a communication device can be coupled to a computing device for synchronization of data as will be explained below. The present disclosure presents methods and device for allowing identification of a connected device. In at least one implementation, the identification of the communication device coupled to a computing device can be based upon the wallpaper associated with the communication device being displayed on a display coupled to the computing device. For example, a husband and wife may both have the same model of communication device but have different wallpapers. Being familiar with each respective wallpapers, identifying the communication device on the computing device can be achieved by displaying the same wallpaper of the communication device on the computing device. This provides for easy evaluation as to which communication device is coupled to the computing device. This is advantageous in situations when, for example, two communication devices that have identical hardware are each located adjacent to the computing device and each is capable of being communicatively coupled to the computing device. In this situation, the computing device may not connect to the desired communication device. If the wallpaper of the communicatively coupled communication device is displayed on the computing device, the user will more easily notice that the desired computing device is not communicatively coupled.

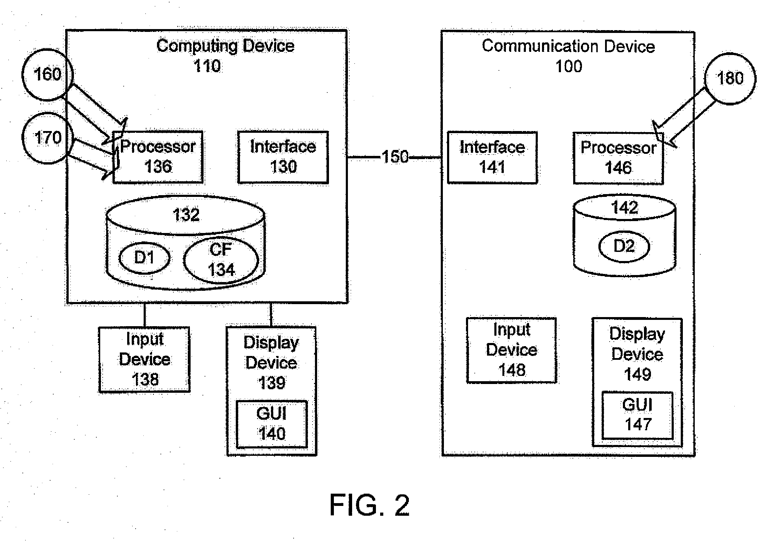

An example of a system for synchronization of files on a computing device and communication device is presented in FIGS. 2-5. FIG. 2 depicts a system for updating synchronization configuration files at a computing device 110, according to non-limiting implementations, in which synchronization occurs when a communication device 100 is in communication with the computing device 110. The computing device 110 and the second computing device that is a communication device 100 can synchronize via a link 150. The link 150 can be wireless or wireless, as desired, and can further comprise any suitable communication network. Synchronization can occur between the computing device 110 and communication device 100 periodically, when communications are initialized, when triggered by a user of the computing device 110, the, communication device 100, or both, a combination of such occurrences, or other occurrences indicative of a desire to synchronize the computing device 110 and the communication device 100. In general, during synchronization, specific data present at each of the computing device 110 and communication device 100 is resolved such that similar versions of the data are present on both the computing device 110 and communication device 100. Such synchronization can comprise at least one of downloading data to the communication device 100 from the computing device 110; uploading data to the computing device 110 from the communication device 100; and deleting data from at least one of the computing device 110 and communication device 100. In at least one implementation, the synchronization application can be present only on the computing device 110.

The computing device 110 generally comprises any suitable computing device, including but not limited a desktop computer, a laptop computer, a server, a multimedia player, an electronic device, a mobile device and the like.

The computing device 110 comprises an interface 130 enabled to communicate with the communication device 100, the interface 130 being generally compatible with the link 150. That is, if the link 150 comprises a wireless link, the interface 130 is enabled to communicate wirelessly, using any suitable protocol; alternatively or in addition, if the link 150 comprises a wired link, then the interface 130 is enabled to communicate via a wired link, using any suitable wired protocol. The interface 130 can be a serial port, short range wireless (for example, BLUETOOTH), universal serial bus port, infrared port or the like.

The computing device 110 further comprises a memory 132 for storing at least one configuration file 134 associated with the communication device 100, the at least one configuration file 134 comprising data for synchronizing the communication device 100 with the computing device 110, and described in more detail below. The memory 132 can further comprise data D1, which is to be synchronized with data D2 stored at the communication device 100. In some implementations, the data D1 and D2 can comprise any suitable media file, including but not limited to calendar data, address book information, music data, video data, playlists, library(s) of media files, or any combination thereof.

In some implementations, a plurality of configuration files can be associated with the communication device 100. The plurality of configuration files can include the at least one configuration file 134 and can be stored in the memory 132.

The memory 132 can comprise any suitable-memory device, including but not limited to random access memory (RAM), removable memory, memory cards, hard disks, and the like. In some implementations, the memory 132 can comprise a database, with the at least one configuration file 134 stored therein. The memory 132 can be a non-transitory memory or a transitory memory.

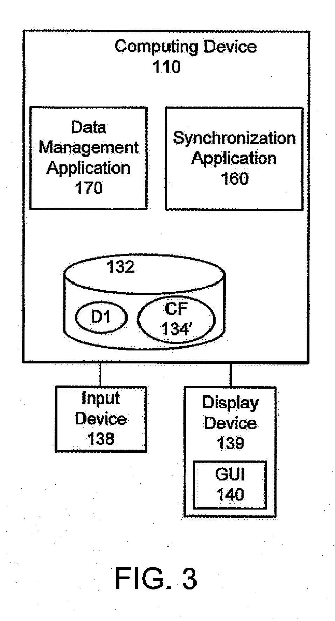

The computing device 110 further comprises a processor 136 in communication with the interface 130 and the memory 132, for example via a suitable computer bus (not depicted). The processor 136 is generally enabled to effect synchronization between the computing device 110 and the communication device 100. For example, synchronization can include but is not limited to downloading at least a subset of data D1 to the communication device 100, receiving at least a subset of data D2 from the communication device 100 and storing the at least a subset of data D2 in storage, and deleting at least a subset of data D1. The processor 136 can also enabled to: retrieve the at least one configuration file 134 associated with the communication device 100, the communication device 100 having been previously synchronized with the computing device 110. In at least one implementation, the retrieving can occur in the absence of communication between the communication device 100 and the computing device 110. The processor 136 can also be enable to update the at least one configuration file 134, in accordance with data indicative of changes to the at least one configuration file 134, such that the at least one configuration file 134 is in an updated state (for example, at least one configuration file 134, as depicted in FIG 3), such that when the communication device 100 is next in communication with the computing device 110, the at least one configuration file 134 in an updated state is used to synchronize the communication device 100 with the computing device 110.

The computing device 110 can also be in communication with any suitable input device 138, or combination of input devices, including but not limited to a keyboard, a pointing device, a mouse, a trackball, a touchscreen, a touchpad, and the like. The computing device 110 is generally enabled to receive input data from the input device 138 for processing by the processor 136.

The computing device 110 can also be in communication with any suitable display device 139, the processor 136 can further be enabled to control the display device 139 to display information, for example regarding synchronization, to at least one graphical user interface (GUI) 140, for example. The display device 139 can include, but is not limited to, a flat panel display (e.g. a liquid crystal display (LCD), plasma, and the like), a cathode ray tube (CRT), a computer monitor, and the like.

The input device 138 and the display device 139 can be used by a user to interact with the computing device 110.

In some implementations, the computing device 110 can comprise the input device 138 and the display device 139.

The computing device 110 further comprises a synchronization application 160, as illustrated in FIGS. 2-4. The synchronization application 160 causes the processor 136 to perform several functions when the processor 136 processes the synchronization application 160. For example, the synchronization application 160 can cause the processor 136 to synchronize the computing device 110 and communication device 100 when the computing device110 and communication device 100 are in communication. In particular, the synchronization application 160 can cause data D1 and D2 to synchronize in accordance with the at least one configuration file 134 associated with the communication device 100. For example, the at least one configuration file 134 can comprise data indicative of a subset of data D1 that is to be synchronized with data D2.

However, in the absence of communications between the computing device 110 and communication device 100 (such that the communication device 100 is either absent from the system 100 and/or the link 150 has not been established and/or the link 150 has been severed), then the synchronization application 160 can cause the processor 136 to update the at least one configuration file 134, such that at least one updated configuration file can be used to synchronize the communication device 100 with the computing device 110 during the next synchronization session.

The synchronization application 160 can be stored in the memory 132 and be processed by the processor 136, which then controls the display device 139 to display the at least one GUI 140, such that a user can interact with the synchronization application 160 via the input device 138.

The computing device 110 can further comprise a data management application 170 for managing data D1. In some implementations, the data management application 170 can comprise a multimedia file management application for managing multimedia, playing multimedia files, downloading multimedia files from a communication network (not depicted), for example via the Internet, or a combination thereof.. In these implementations, the data D1 comprises media data as described above. Furthermore, in implementations where the data management application 170 is for downloading multimedia files from a communication network, the interface 130 can be enabled to communicate via the communication network. The data management application 170 can be stored at the memory 132 and processed by the processor 136, for example, when input data indicative of a desire to use the data management application 170 is received via the input device 138.

The communication device 100 generally comprises a portable computing device, including but not limited to a PDA (personal digital assistant), a cell phone, a laptop computer, and the like, or a combination thereofr. In general, the communication device 100 comprises any device which can be synchronized with the computing device 110.

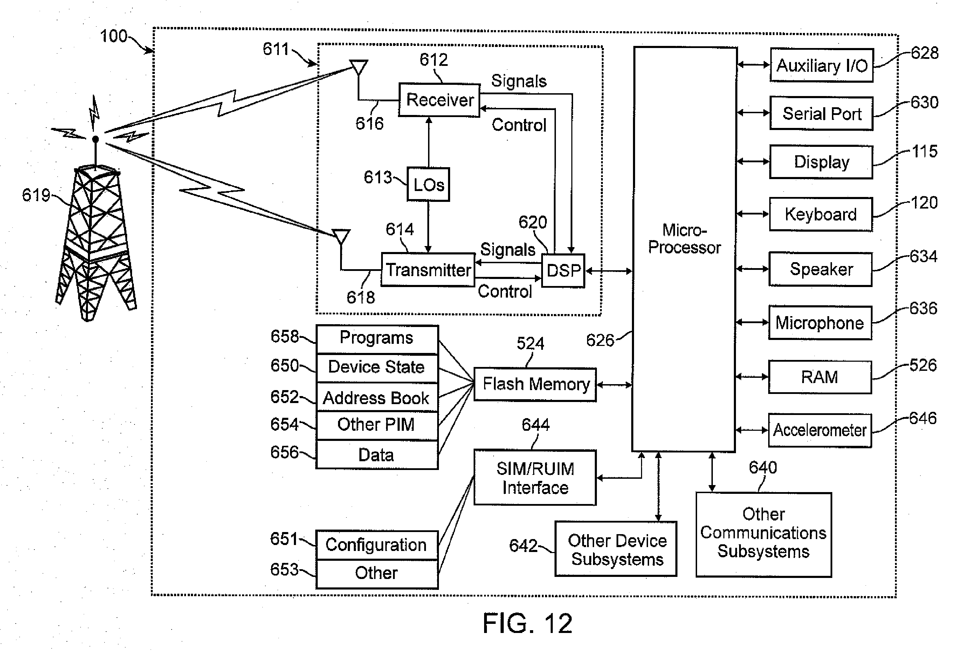

The communication device 100 comprises an interface 141, similar to interface 130, and generally compatible with link 150. The communication device 100 further comprises a memory 142 for storing the data D2. The memory 142 can be similar to the memory 132, as described above. A further example of possible components included on the communication device 100 is presented in relation to FIG 12 below. The communication device 100 further comprises a processor 146 for effecting synchronization between the computing device 110 and communication device 100. Synchronization can include but is not limited to uploading at least a subset of data D2 to the computing device 110, receiving at least a subset of data D1 from the computing device 110 and storing the at least a subset of data D1 in storage, and deleting at least a subset of data D2. The communication device 100 can comprise at least one processor, for example as described in relation to FIG. 12. In other implementations, the communication device 100 can comprise multiple processors. In at least one implementation, the reference to processor as used herein can be in regards to a single processor and yet in other implementations is to multiple processors acting in parallel or serially.

The communication device 100 further comprises an input device 148 similar to the input device 138 of the computing device 110 and a display device 149 similar to the display device 139 of the computing device 110. The display device 149 is generally enabled to display a GUI 147 such that user can interact with the communication device 100 via the input device 148 and the display device 149.

In some implementations, the communication device 100 further comprises a synchronization application 180 for managing synchronization at the communication device 100 when synchronization is occurring. The synchronization application 180 can be stored at the memory 142 and processed by the processor 146 when synchronization is initiated, for example once the link 150 is established. In some implementations, the synchronization application 180 can also cause synchronization to initiate when processed by the processor 146.

FIG 3 depicts the computing device 110 with the at least one configuration file 134 in an updated state, represented by at least one updated configuration file 134'.

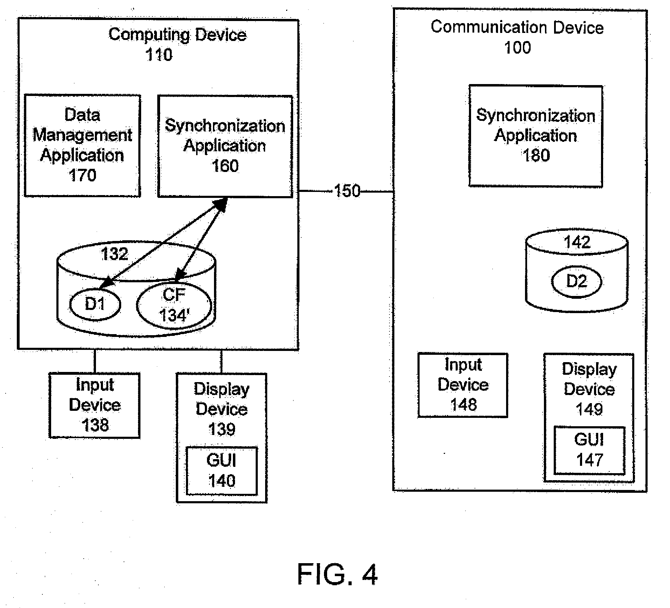

Once the at least one updated configuration file 134' is produced, a new communication session can be established with the communication device 100, for example as in FIG. 4. In other words, in FIG 4, the link 150 is re-established. The new communication session can be established immediately, or after any suitable time period. In exemplary non-limiting implementations, the new communication session is established whenever a user of the computing device 110 and communication device 100 wishes to synchronize them.

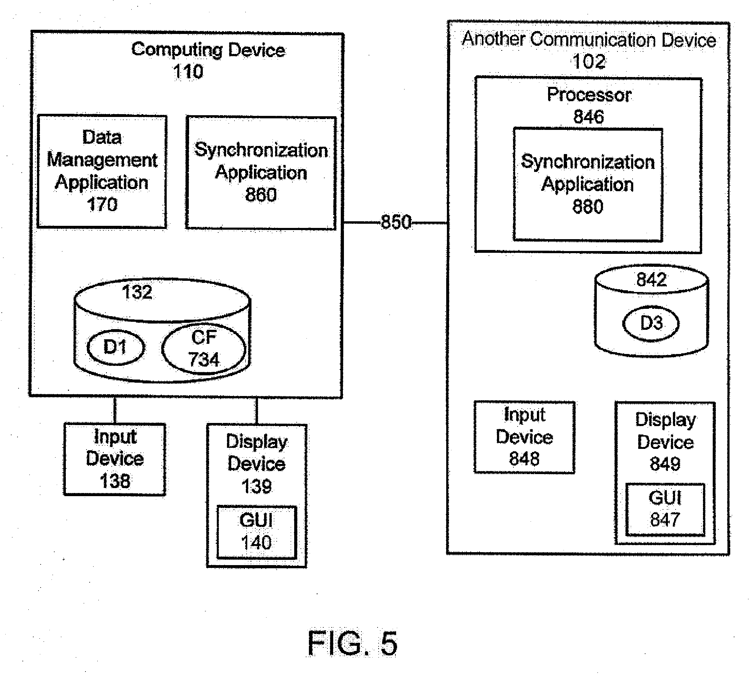

In an alternative implementation as illustrated in FIG. 5, the updated configuration file 734 can also be used to synchronize an another communication device 102. FIG. 5 is similar to FIG. 2, with like elements having like numbers, however the communication device 100 has been replaced with the another communication device 102. Elements of FIG. 5 that are preceded by an "8" are similar to elements of FIGS. 2 and 3 that are preceded by a "1", unless otherwise described below. For example, in these implementations, the computing device 110 comprises a synchronization application 860 that is similar to the synchronization application 160, however with additional functionality describe below.

In these implementations, the another communication device 102 can be similar to the communication device 100, though can be a different device model/brand/type etc. In these implementations, a communication session is established between the computing device 110 and the another communication device 102. For example, a link 850 can be established between the computing device 110 and another communication device 102, which is similar to link 150 of FIG. 2.

The synchronization application 860 can then be used to set preferences for synchronization between the computing device 110 and another communication device 102, as described above with reference to the synchronization application 160 and the computing device 110 and communication device 100 illustrated in FIG. 2. In some implementations, the another communication device 102 has been previously synchronized with the computing device 110, while in other implementations, the another communication device 102 has not been previously synchronized with the computing device 110. In other words, in some implementations, the memory 132 can comprise at least one configuration file (not depicted) associated with the another communication device 102, which is similar to the at least one configuration file 134.

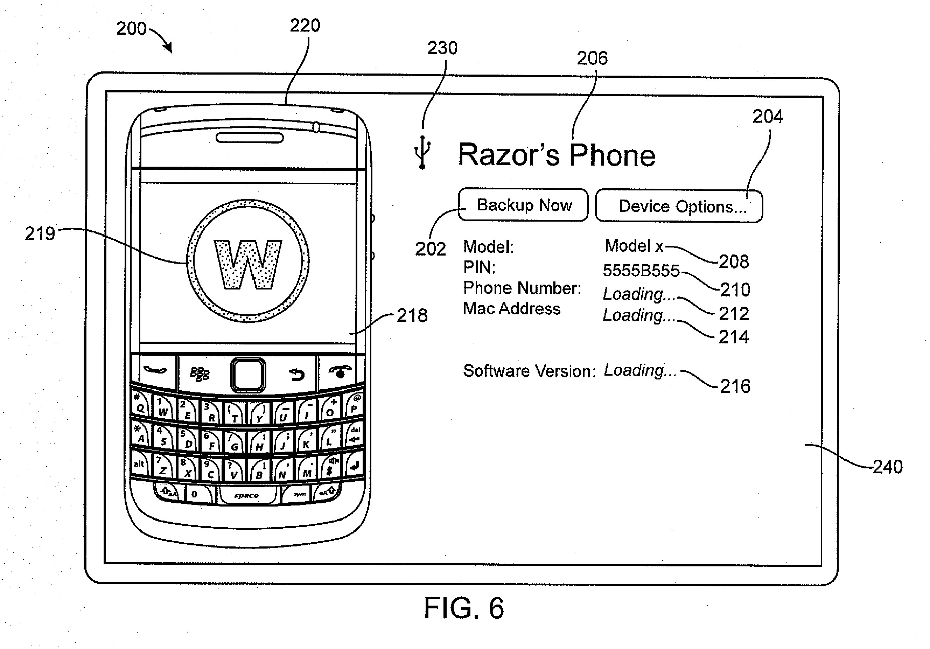

Furthermore, in these implementations, the synchronization application 860 comprises an option to use a configuration file associated with a computing device other than the another communication device 102. For example, as depicted in FIGS. 6-8, a GUI 200 can display information associated with the synchronization application 860.

FIGS. 6-8 illustrate an implementation of a GUI 200 of computing device 110 which is displaying a synchronization application window 240 of the synchronization application 160. When synchronization application 160 is initialized after a request for synchronization, a virtual representation 220 of the most recently connected communication device 100 can be displayed. In some implementations, other images, such as a generic communication device can also be displayed. The virtual representation 220 can include a display 218, which can display a predetermined image, such as a watermark 219, to signify that no device is currently connected. The watermark 219 can identify a brand to associate the communication device 100 with a particular company to engender brand loyalty. For example, the watermark 219 can be a trademark of the manufacturer of the communication device 100.

The synchronization application window 240 can include a communication device identification 206. In at least one implementation, the synchronization application window 240 can be stored in the memory 132 of the computing device 110. When the communication device identification 206 is stored on the computing device 110, the communication device identification 206 can be displayed in the synchronization application window 240. A connection-type indicator 230 can identify the means for communication between the communication device 100 and the computing device 110. In the illustrated embodiment, the connection-type indicator 230 represents a Universal Serial Bus (USB) connection-typ, but other connection types such as Bluetooth®, Universal Wireless Bus (UWB), Firewire, Wi-Fi, Ethernet, over the Internet via the cloud, or other connection types for allowing communication between a communication device and a computing device can be included. While synchronization application 160 is searching for a communication device to communicate with, other identification information can be absent from the display, and an indication that information is being loaded can be displayed. For example, a phone number 212, Mac address 214 and software version 216 show that information from the communication device 100 is loading into computing device 110. Other information, such as the communication device identification 206, model number 208, and a personal information number (PIN) 210 can be loaded more quickly or can be stored from a previous connection to communication device 100. The synchronization application window 240 can also include a backup button 202 to initiate a backup of information on communication device 100. The backup of the communication device 100 can store various files from the communication device 100 to the first computing device 110 or another designated storage medium. A device options button 204 can also be included to change settings on the communication device 100 from computing device 110. If the device options icon 204 is selected, a dialog box or additional screen can be displayed thereby allowing the user to select a variety of different options to change on the communication device 100. For example, the device options icon 204 can include options for changing the time zone of the communication device 100, enabling a navigation module on the communication device 100, in addition to or alternatively other options for changing device settings.

In at least one implementation, synchronization of the data between the computing device 110 and communication device 100 can require an identification code to be input on the computing device 110. For example, the user of the computing device 110 can be required to input the PIN code of the communication device 100 prior to synchronization with the computing device 110. When such synchronization application 160 requires the identification code, the information contained on the synchronization application window 240 can remain blank or otherwise indicate that it is loading. In at least one implementation, the communication device 100 can be password-protected so that a password must be entered prior to synchronization. When the communication device 100 has a password, the synchronization application 160 can restrict the synchronization until the appropriate password is entered. In at least one implementation, both the computing device 110 and the communication device 100 can have separate passwords. In other implementations, only the password of the communication device 100 is required in order to perform the synchronization.

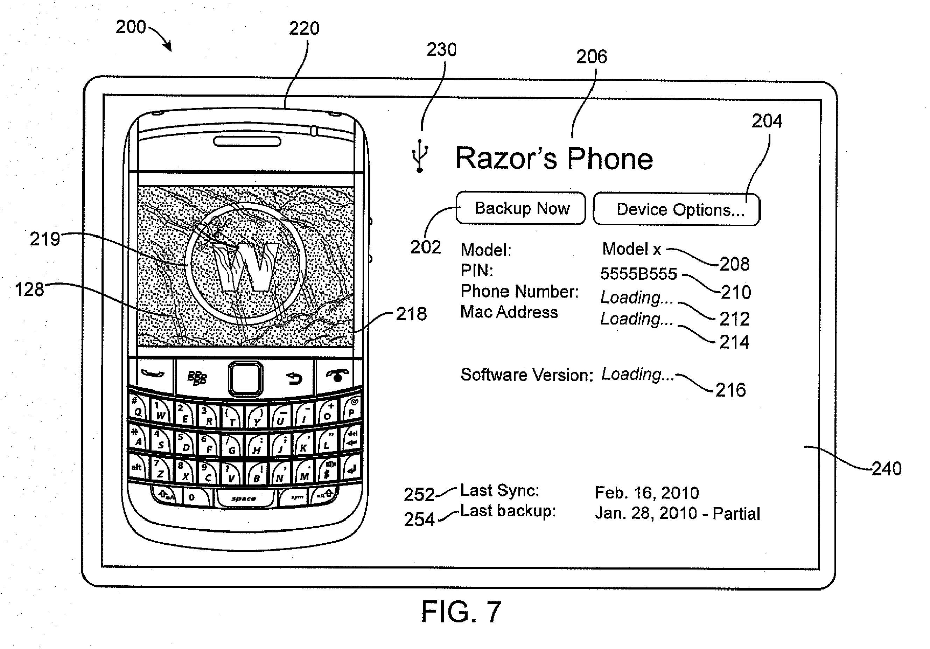

In FIG 7, communication is established between communication device 100 and computing device 110, but information is still being loaded as indicated by the "Loading..." labels. Some information may be loaded and displayed while other information is still being communicated. This can get information to the user more quickly because information can be displayed as received instead of waiting for all information to be received before displaying the information. In the example of FIG 7, wallpaper 128 is displayed over watermark 219. The wallpaper 128 illustrated in FIG. 7 is of a kayaker and a waterfall. The wallpaper 128 can be reproduced in window 218 of the synchronization application window 240. In other implementations, wallpaper 128 can be reproduced over other parts, or the entirety of, synchronization application window 240. Dates and times for the last synchronization 252 and last backup 254 can also be included in the synchronization application window 240. Such dates and times can inform the user in determining if another synchronization or backup is desired because data is becoming stale.

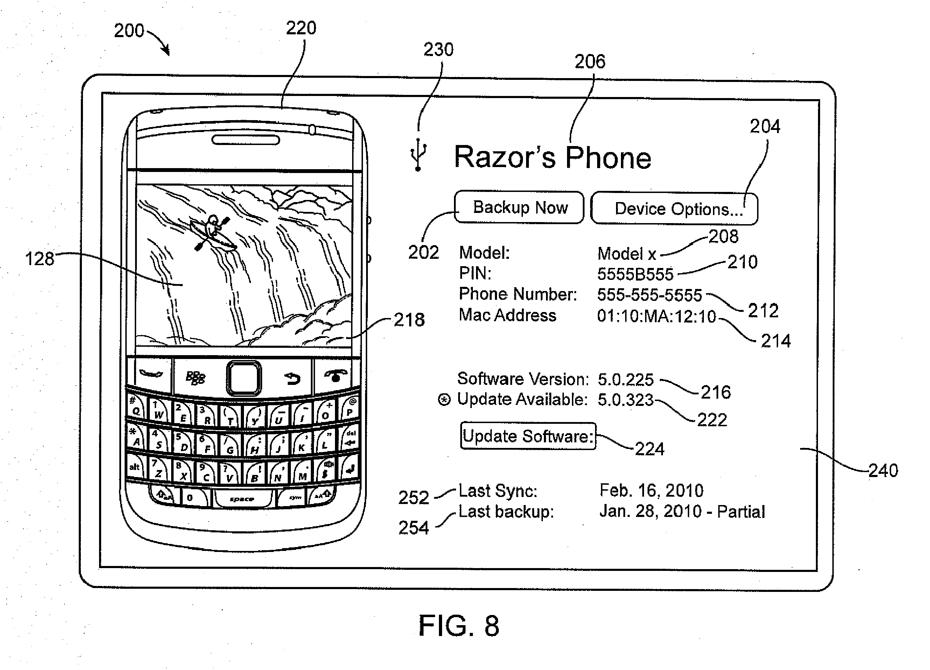

FIG. 8 illustrates a synchronization application window 240 having completed transfer of information from communication device 100 to computing device 110. In this example, wallpaper 128, phone number 212 and MAC address 214 are downloaded and completely displayed in the synchronization application window 240. In addition, software version number 216 can be displayed along with an indication 222 that an updated version is available. Because an updated software version is available, a software update button 224 can be included to allow the user to update the software of communication device 100 using computing device 110. When the software update button 124 is activated, updated software can be downloaded from the Internet and uploaded to the communication device 100, which can then install the updated software.

When the wallpaper 128 is displayed, as in FIGS. 7 and 8, the user can more easily identify the communication device 100 that is connected. If a communication device is connected that the user did not want to connect, the user can identify it more quickly and switch to the correct communication device. Any time the user changes an image used for wallpaper 128, the new wallpaper will be updated in the synchronization software 160 the next time the communication device 100 is connected to the computing device 110. In addition, displaying wallpaper 128 can enable a better user experience because the user is presumably fond of it since the user chose the image. Therefore, the wallpaper 128 not only enables efficient identification of the communication device 100 connected but also provides a better user experience.

The computing device 110 as described above can be enabled for updating synchronization configuration files. The computing device 110 can include a display 139, an interface 130 for communicating with a communication device 100, and a non-transitory memory 132 for storing at least one wallpaper file associated with the communication device 100. The computing device 110 can also include a processor 136 in communication with the interface 130, display 139 and the memory 132. The processor 136 can be configured to retrieve the at least one wallpaper file associated with the communication device 100 and display the wallpaper file on the display 139. The processor 136 can also be further configured to synchronize the wallpaper file of the communication device 100 based on a request to change the wallpaper file of the communication device 100 at the computing device 110. The request to change the wallpaper file can be implemented for example through a menu system. In at least one implementation, the device options button 204 can be selected and an additional selection of the wallpaper file on the communication device 100 can be implemented.

The processor 136 can be further configured to display a virtual representation of the changed wallpaper file on the display 139 of the computing device 110. The wallpaper file shown on the display 139 of the computing device 110 can be adapted to fit the format of the display 139 of the computing device 110, which in many instances is different from that of the communication device 100.

The presentation of the wallpaper file on the computing device 110 can be as a background to the synchronization application, the background for the general display, or a virtual representation of the communication device 100 within the synchronization application window 240. When the virtual representation 220 of the communication device 100 is implemented, a change in the wallpaper file of the communication device 100 can be displayed thereon. Additionally, other options as described above can be implemented on the computing device 110.

Additionally, the processor 136 can be further configured to securely synchronize data by obtaining input of a PIN at the computing device, retrieving a PIN from the communication device, and comparing the inputted PIN with the retrieved PIN, and performing synchronization on a valid PIN comparison. Furthermore in an another implementation, the processor 136 can be further configured to securely synchronize data by obtaining input of a password at the computing device, retrieving a password from the communication device, comparing the inputted password with the retrieved password, and performing synchronization on a valid password comparison.

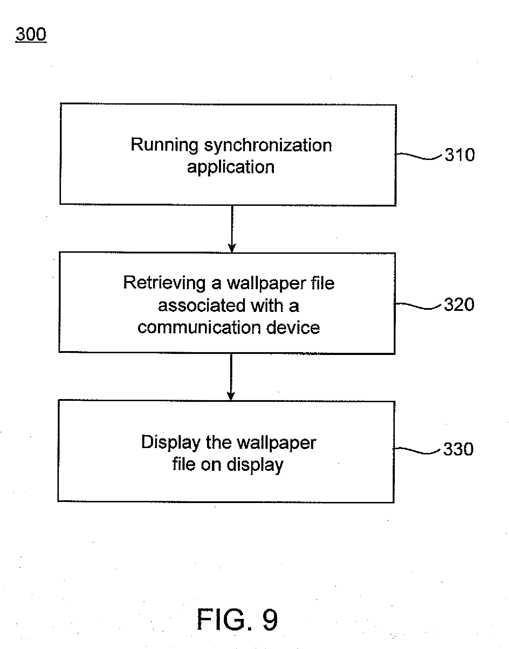

In at least one implementation as illustrated in FIG. 9, a method 300 of synchronizing configuration files between a computing device and a communication device is disclosed. The method 300 includes running a synchronization application on the computing device in response to a request for synchronization (block 310). The method 300 also includes retrieving a wallpaper file associated with the communication device (block 320). The retrieving of the wallpaper file occurs when the computing device is communicatively coupled to the communication device. The method further includes displaying the wallpaper file on a display associated with the computing device (block 330). The displaying of the wallpaper file can be as described above such that the wallpaper file can be either a part of a virtual representation of the communication device or can cover at least a portion of the display of the computing device. Additionally, the method can further include displaying other aspects of the synchronization application window as described above in relation to FIGS. 6-8. In at least one implementation as described above, a PIN or password can be required prior to synchronization. In at least one implementation, the method 300 further includes securing synchronization by obtaining an input password from the computing device, comparing the input password with the communication device password, and performing synchronization on a valid password comparison. In at least one implementation, the method 300 further includes securing synchronization by obtaining an input PIN from the computing device, comparing the input PIN with the communication device PIN, and performing synchronization on a valid password comparison. In another implementation, the synchronization can occur once the password is entered on the communication device.

While the above has been described in relation to a computing device 110, the present disclosure also contemplates the configuration of the communication device 100 as well. The communication device 100 can be configured for synchronization with a computing device 110. The communication device 100 can comprise a display 115, an interface 141, a non-transitory memory 142, and a processor 626 (shown in FIG. 12). The interface 141 can be configured for communication with a computing device 110. The non-transitory memory 142 can store at least one wallpaper file for display on the display 115. The processor 626 can be configured to send the at least one wallpaper file to the computing device 110 via the interface 141. The processor 626 can be further configured to synchronize the wallpaper of the communication device 100 based on a request to change the wallpaper of the communication device 100 at the computing device 110.

Additionally, the processor 626 can be further configured to securely synchronize data by obtaining an input PIN from the computing device and comparing the input PIN with the communication device PIN and perform synchronization on a valid PIN comparison. Furthermore in an another implementation, the processor can be further configured to securely synchronize data by obtaining an input password from the computing device and comparing the input password with the communication device password and perform synchronization on a valid password comparison.

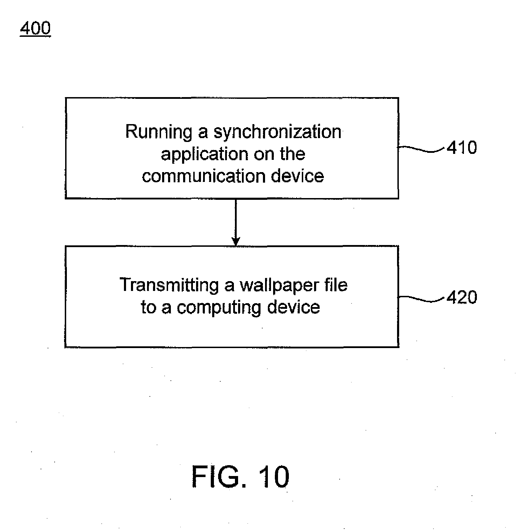

Figure 10 illustrated another implementation of a method for synchronizing configuration files between a computing device and a communication device. The method 400 can include running a synchronization application on the communication device in response to a request for synchronization (block 410). The method 400 can further include transmitting a wallpaper file associated with the communication device to a computing device for display in conjunction with a synchronization application of the computing device (block 420). Additionally, the method can further include transmitting additional information as described in relation to FIGS. 6-8. In at least one implementation as described above, a PIN, or password can be required prior to synchronization. In at least one implementation, the method 400 can further include securing synchronization by obtaining input of a password, retrieving from the communication device a password, comparing the input password with the retrieved password, and performing synchronization on a valid password comparison. In at least another implementation, the method 400 can include securing synchronization by obtaining input of a PIN, retrieving from the communication device a PIN, comparing the input PIN with the retrieved PIN, and performing synchronization on a valid PIN comparison.

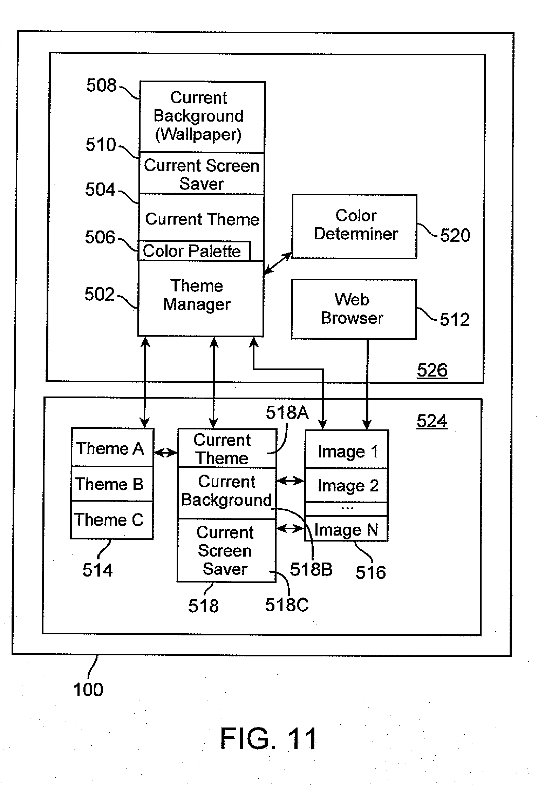

FIG. 11 illustrates an implementation of storing a wallpaper file in the communication device 100. More specifically, FIG 11 illustrates a persistent storage 524 (for example, a flash memory) which can store theme data 514 for a plurality of defined user interface themes, namely Theme A, Theme B, and Theme C and images 516 for a plurality of images 1 to N. Images 516 can be stored in accordance with various common image formats such as .gif, .jpg, .bmp, .png, etc. Persistent storage 524 can also store initialization data 518 for identifying a current theme 518A (for example, one or more themes 514), a current background or wallpaper image 518B (for example from images 516) and a current screen saver image 518C (for example from images 516) to apply upon start-up of device 100.

Volatile storage, for example memory 526, can store a theme manager component 502 adapted to apply theme data 514 to user interface elements (not shown) for displaying on a color-capable display (not shown). Theme data 514 to be applied to the use interface element can comprise current theme data 504 which comprises a color palette 506 for rendering the elements in specific colors. Though not shown, persisted themes 514 can comprise a respective color palette data as well. Theme manager 502 can be configured to load current theme data 504 from theme data storage 514 using current theme initialization data 518A. A current background image or wallpaper 508 is stored for display as well as an optional screen saver image 510 for display over at least a portion of the display to hide the content thereof when the device 100 has not been active for a period of time or upon initiation by the user. The volatile memory 526 can be loaded with a background and a screen saver image data from the persistent storage 524 using initialization data 518B and 518C.

Theme manager component 502 can be configured to allow a user to choose a particular stored theme 514 as the current theme 504, saving the choice as initialization data 518A. Similarly, the choice of the screen saver and wallpaper can be facilitated. More importantly, however, in accordance with the present implementation, theme manager 502 can be adapted to dynamically determine a color palette 506 for use with a selected wallpaper for current theme 504 from color identified by a color determiner component 520. Color determiner component 520 is configured to analyze an image (for example current background 508) to determine one or more colors defining the image. The identified color can then be used to dynamically determine the color palette 506 for use with the image in the current theme 504 as discussed further below. The color palette data 506 can be saved to theme data storage 514, for example, defining a user-defined theme or current theme 518A.

A web browser 512 can be stored on memory 526. The web browser 512 can be enabled to access image 516. The web browser 512 can also cooperate with the processor (not shown) and additional transmitters and receivers such as those described below to access the internet over a wireless network. In other implementations, the web browser 512 can access the internet over a Wi-Fi connection or the like.

The block diagram of FIG. 12 represents a communication device 100 interacting in a communication network 619 shows the inclusion of a microprocessor 626 which can control the operation the communication device 100. Communication subsystem 611 can perform all communication transmission and reception with wireless network 619. Microprocessor 626 can further connect with auxiliary input/output (I/O) subsystem 628, serial port (for example, a USB port) 630, display 115, keyboard 120, speaker 634, microphone 636, random access memory (RAM) 526, and flash memory 524. Other communication subsystems 640 and other device subsystems 642, such as accelerometer 646 are generally indicated as connected to the microprocessor 626 as well. An example of communication subsystem 640 can be that of a short range communication subsystem such as a Bluetooth® communication module or an infrared device and associated circuits and components. Additionally, microprocessor 626 can perform operating system functions and can enable execution of programs 658 on communication device 100.

The above-described auxiliary I/O subsystem 628 can take a variety of different subsystems including a navigation tool such as the above-described optical trackpad module 122. The navigation tool can also or alternatively include a trackpad-based device, a thumbwheel, navigation pad, touch interface, tactile feedback button, joystick, or other tools for controlling navigation on a display of the communication device 100.. These navigation tools can be located on the front surface of device 100 but may be located on an alternative exterior surface of the device 100. Other auxiliary I/O devices can include external display devices and externally connected keyboards (not shown). While the above examples have been provided in relation to the auxiliary I/O subsystem, other subsystems capable of providing input or receiving output from the communication device 100 are considered within the scope of this disclosure. Additionally, other keys can be placed along the side of the device 100 to function as escape keys, volume control keys, scrolling keys, power switches, or user-programmable keys.

In an exemplary implementation, flash memory 524 can be enabled to provide a storage location for the operating system, device programs, and data. While the operating system in an implementation can be stored in flash memory 524, the operating system in other implementations can be stored in read-only memory (ROM) or a similar storage element (not shown). As those skilled in the art will appreciate, the operating system, device application or parts thereof can be loaded in RAM 526 or other volatile memory.

In at least one implementation, flash memory 524 can contain programs and applications 658 for execution on the device 100. Examples of such program and application can include but are not limited to text applications, an address book 652, a personal information manager (PIM) 654, and a device state 650 manager. Furthermore, programs 658 and other information 656 including data can be segregated upon storage in the flash memory 524 of the device 100.

When the communication device 100 is enabled for two-way communication within wireless communication network 619, the communication device 100 can send and receive signals from a mobile communication service. Examples of communication systems enabled for two-way communication include, but are not limited to, GPRS (General Packet Radio Service) network, UMTS (Universal Mobile Telecommunication Service) network, EDGE (Enhanced Data for Global Evolution) network, and CDMA (Code Division Multiple Access) network and those networks generally described as packet-switched, narrowband, data-only technologies mainly used for short burst wireless data transfer. For the systems listed above, communication device 100 can be enabled to transmit and receive signals from communication network 619. Other systems may not require such identifying information. GPRS, UMTS, and EDGE can require the use of a SIM (Subscriber Identity Module) to allow communication with the communication network 619. Likewise, most CDMA systems can require the use of a RUIM (Removable Identity Module) in order to communicate with the CDMA network. The RUIM and SIM card can be used in multiple different communication devices 100. Communication device 100 may be able to operate some features without a SIM/RUIM card, but device 100 may not be able to communicate with the network 619. A SIM/RUIM interface 644 located within device 100 allows for removal or insertion of a SIMIRUIM card (not shown). The SIM/RUIM card features memory and holds key configurations 651, and other information 653 such as identification and subscriber related information. With a properly enabled communication device 100, two-way communication between communication device 100 and communication network 619 can be possible.

If the communication device 100 is enabled as described above or the communication network G19 does not require such enablement, two-way communication-enabled device 100 can be adapted to transmit and receive information from the communication network 619. The transfer of communication can be from device to device. To communicate with communication network 619, device 100, in one implementation, can be equipped with an integral or internal antenna 618 for transmitting signals to communication network 619. Likewise, in one implementation, communication device 100 can be equipped with another antenna 616 for receiving communication from communication network 619. These antennae (616, 618) in another implementation can be combined into a single antenna (not shown). As one skilled in the art would appreciate, the antenna or antennae (616, 618) can be externally mounted on device 100 in another implementation.

When equipped for two-way communication, communication device 100 can feature communication subsystem 611. As is well known in the art, a communication subsystem 611 can be modified to support the operational needs of device 100. A subsystem 611 can include a transmitter 614 and receiver 612 including the associated antenna or antennae (616, 618) as described above, local oscillators (LOs) 613, and a processing module 620 which in one implementation can be a digital signal processor (DSP) 620.

This disclosure contemplates that communication by device 100 with wireless network 619 can be any type of communication that both wireless network 619 and device 100 are enabled to transmit, receive and process. In general, these communications can be classified as voice and data. Voice communication is communication in which signals for audible sounds are transmitted by device 100 the communication network 619. Data communication can include all other types of communication that the device 100 is capable of performing within the constraints of wireless network 619.

Portions of the communication device 100 and supporting components can take the form of hardware elements, software elements or elements containing both hardware and software. In one implementation, the software portions can include, but are not limited to, firmware, resident software, microcode, etc. Furthermore, these software portions can take the form of a computer program product accessible from a computer-usable or computer-readable medium providing program code for use by, or in connection with, a computer or any instruction-executing system. For the purposes of this description, a computer-usable or computer-readable medium can be any apparatus that can contain, store, communicate, propagate, or transport the program for use by, or in connection with, the instruction-executing system, apparatus, or device. The medium can be an electronic, magnetic, optical, or semiconductor system (or apparatus or device) or a propagation medium (though propagation mediums as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read-only memory (CD-ROM), compact disk-read/write (CD-R/W) and DVD. Both processors and program code for implementing each as aspect of the system can be centralized or distributed (or a combination thereof) as known to those skilled in the art. Furthermore, the method can either be pre-loaded onto device 100 or downloaded separately as what is known as an app, for example, an application downloaded over the Internet that is not necessarily pre-loaded onto a communication device. In other implementations, method can be integrated into text applications, such as email, for use only in the email application.

A data processing system suitable for storing program code and for executing program code, which can be implemented in any of the above-referenced devices described herein, can include at least one processor coupled directly or indirectly to memory elements through a system bus. The memory elements can include local memory employed during actual execution of the program code, bulk storage, and cache memories that provide temporary storage of at least some program code to reduce the number of times code must be retrieved from bulk storage during execution. I/O devices (including but not limited to keyboards, displays, pointing devices, etc.) can be coupled to the system either directly or through intervening I/O controllers.

Examples have been described above regarding a method of communicatively coupling a first device to a second device. One of ordinary skill in the art will appreciate that the features in each of the figures described herein can be combined with one another and arranged to achieve the described benefits of the presently disclosed system and of communicatively coupling a first device to a second device. Additionally, one of ordinary skill will appreciate that the elements and features from the illustrated implementations herein can be optionally included to achieve the described benefits of the system and method of communicatively coupling a first device to a second device. Various modifications to and departures from the disclosed implementations will occur to those having skill in the art. Various modifications to and departures from the disclosed implementations will occur to those having skill in the art. The subject matter that is intended to be within the spirit of this disclosure is set forth in the following claims.

## Claims

1. A method of synchronizing using a computing device (110), the method comprising:
running (310) a synchronization application (160) on the computing device (110) in response to a request for synchronization;
retrieving (320) a wallpaper file (128) associated with a communication device (100), when the communication device (100) is communicatively coupled to the computing device (110);
displaying (330) the wallpaper file (128) on a display (139) associated with the computing device (110).

2. The method of claim 1, further comprising receiving a request to change the wallpaper file (128) of the communication device (100) at the computing device (110).

3. The method of claim 2, further comprising synchronizing the wallpaper of the communication device (100) based on the request to change the wallpaper file (128).

4. The method of claim 3, further comprising displaying the changed wallpaper file (128) on a display (139) associated with the computing device (110).

5. The method as recited in any one of the preceding claims, further comprising displaying a virtual representation (220) of the communication device (100) on the display (139) associated with the computing device (110), the virtual representation (220) including a virtual representation of the wallpaper file (128) of the communication device (100).

6. The method as recited in any one of the preceding claims, further comprising retrieving from the communication device (100) a model identification (208) and displaying the model identification (208) on the display (139) of the computing device (100).

7. The method as recited in any one of the preceding claims, further comprising securing synchronization by obtaining input of a PIN , retrieving from the communication device (100) a PIN identification (210) and comparing the input PIN with the retrieved PIN identification (210) and performing synchronization on a valid PIN comparison.

8. The method as recited in any one of the preceding claims, further comprising retrieving from the communication device (100) a phone number (212) of the communication device (100) and displaying the phone number (212) on the display (139) of the computing device (110).

9. The method as recited in any one of the preceding claims, further comprising retrieving from the communication device (100) a mac address (214) of the communication device (100) and displaying the mac address (214) on the display (139) of the computing device (110).

10. The method as recited in any one of the preceding claims, further comprising retrieving from the communication device (100) a software version identification (216) of the communication device (100) and displaying the software version identification (215) on the display (139) of the computing device (110).

11. The method as recited in any one of the preceding claims, further comprising displaying a device name (206) on the display (139) associated with the computing device (110).

12. The method of claim 11, further comprising retrieving the device name (206) from the communication device (100).

13. A computing (110) device for updating synchronization configuration files, the computing device (110) comprising:
a display (139);
an interface (130) for communicating with a communication device (100);
a non-transitory memory (132) for storing at least one wallpaper file (508) associated with the communication device (100); and
a processor (136) in communication with the interface (130), the display (139) and the memory (132), said processor (136) configured to execute the method as recited in any one of the preceding claims.

14. A communication device (100) configured for synchronization with a computing device, the communication device comprising:
a display (115);
an interface (141) for communicating with a computing device (110);
a non-transitory memory (142) for storing at least one wallpaper file (508) for display on the display (115); and
a processor (626) in communication with the interface (141), the display (115) and the memory (142), said processor (626) configured to execute the method as recited in any one of claims 1-12.

15. A system for synchronizing files between a computing device (110) and a communication device (100), the system comprising at least one processor (626, 136) configured to execute the method as recited in any one of claims 1-12.
